# EUROPEAN PATENT APPLICATION

(11) **EP 2 287 118 A1**
(43) Date of publication of application: **23.02.2011**
(21) Application number: 10006730.5
(22) Date of filing: 29.06.2010
(51) Int. Cl.: C02F 1/52, C02F 1/46, C02F 9/00

(54) **Process and installation for MAP precipitation and hydrogen production**

(30) Priority: 30.06.2009 IT MI20091156
(71) Applicant: Sereco Biotest S.N.C., 06121 Perugia (IT)
(72) Inventor: Arca, Simone, 06121 Perugia (IT); Poletti, Roberto, 06121 Perugia (IT); Poletti, Luca, 06121 Perugia (IT); Bert, Paolo, 56040 Crespina (Pisa) (IT)
(74) Representative: Trupiano, Federica

(57) **Abstract**

A process and a plant for the removal of ammonium and/or ammonia in wastewaters, are based on the capture of ammonium and/or ammonia present in wastewaters through precipitation of Magnesium Ammonium Phosphate (MAP) by addition of magnesium and phosphorous salts to the wastewaters; the separation of the precipitate from the treated wastewaters; the decomposition of the precipitate in order to recover the energy content of the ammonia removed and recover the magnesium and phosphorous salts previously used; the recycling of the magnesium and phosphorous salts for a new MAP precipitation cycle as reported; and they account for the at least partial conversion of the ammonium and/or ammonia released within the decomposition process into hydrogen and nitrogen by molecular cleavage.

## Description

### Summary

A process and a plant for the removal of ammonium and/or ammonia in wastewaters, are based on the capture of ammonium and/or ammonia present in wastewaters through precipitation of Magnesium Ammonium Phosphate (MAP) by addition of magnesium and phosphorous salts to the wastewaters; the separation of the precipitate from the treated wastewaters; the decomposition of the precipitate in order to recover the energy content of the ammonia removed and recover the magnesium and phosphorous salts previously used; the recycling of the magnesium and phosphorous salts for a new MAP precipitation cycle as reported; and they account for the at least partial conversion of the ammonium and/or ammonia released within the decomposition process into hydrogen and nitrogen by molecular cleavage.

### Field of the invention

The present invention relates to a process for the removal of ammonium and/or ammonia in wastewaters, with particular reference to wastewaters containing ammonium-nitrogen, by means of precipitation of MAP.

More in details, the present invention relates to a process for the removal of the ammonium and/or ammonia in aqueous solution of different kind and origin, particularly in urban and/or industrial wastewaters and wastewaters deriving from anaerobic digestion plats.

### Background of the invention

The environmental regulations in force allow the discharge of a limited amount of ammonium nitrogen. Such regulations are aimed at limiting the leaching of nitrogen compounds (nitrates) into groundwaters for potable uses and into surface waters, contributing to their eutrophication. Wastewaters containing ammonium nitrogen may result from urban, industrial or zootechnical activities. In all cases, it is mandatory to apply a process for the removal of the ammonium load before they are discharged into the sewage system or in surface waters, or, in case it is mandatory by the local laws, before soil spreading.

Various method are known and available for the reduction of the ammonium nitrogen load, that will be herewith referred as "methods for ammonium removal". Such reduction methods may be biological or physicochemical. The biological methods are based on the action of particular, different and numerous bacterial species that, by eliciting a sequence of different redox processes, eliminate the ammonium, by converting it into molecular nitrogen, even with high yields.

The physicochemical methods are based on the principle of physical or chemical separation of ammonium from the wastewater itself. Among these methods the most popular is the stripping of gaseous ammonia, by means of air or application of vacuum, from alkalized wastewater, often with heating of stripping air or of the wastewater itself. Other methods utilize ionic exchange resin or zeolite minerals that capture the ammonium ion through exchange and in little amount, also gaseous ammonia. When the material that produces the exchange is exhausted, that is when all the exchanging sites are occupied by the various cations (NH₄, Ca, Mg, Na, K, etc.), they have to be regenerated with acid or sodium chloride solutions. The eluates resulting from the regeneration of resins or zeolites contain high concentrations of ammonium, that can be appropriately recovered by precipitating ammonium as struvite or under the form of gaseous ammonia, by means of stripping of the alkali solutions.

The biological methods require cumbersome and expensive aeration basins and are conveniently applicable only at an ammonium nitrogen concentration not exceeding 700-800 ppm because at higher concentrations the biological processes may be subjected to inhibition phenomena.

The ammonia stripping process results poorly efficient due to the high costs both economical and energetical. As a matter of fact, such a process requires high amounts of alkali in order to raise the pH up to the high values required for stripping to occur, and turns out to be extremely expensive due to heating (particularly during winter periods) and the creation of vacuum necessary to remove the ammonia. Moreover, it requires skilled personnel and its costs make it suitable only for plants with high amount of wastewater to be treated that justifies the economic investment.

Among the physicochemical methods there is also the possibility of capturing the ammonium by precipitating it as an insoluble salt. There are very few ammonium salts that are insoluble; among those, Magnesium Ammonium Phosphate (MAP) is the most suitable for the purpose. The addition of magnesium and phosphorous salts to the wastewater in order to obtain a stoichimetric ratio Mg:N:P of 1:1:1 results in the precipitation of a complex salt MgNH₄PO₄-6H₂O also known as "*struvite*" or most commonly MAP. Y. Jaffer et al. in Water Research 36 (2002) 1834-1842 report the application of the MAP precipitation process in order to remove the phosphorus content in wastewaters. Such application of MAP is known and applied in several plants for the treatment of wastewater. For the removal of phosphorus only the addition of magnesium salts is required because the ammonium is already present in wastewaters at a concentration high enough to satisfy the required stoichimetrical ratios. This arises from the fact that generally the phosphorus load into the wastewaters does not exceed 300 ppm.

For the removal of ammonium that in certain wastewaters may reach values even higher than 3000-4000 ppm the precipitation of MAP may be technically feasible but it requires high amounts of magnesium and phosphorus salts so that the whole process turns out to be quite expensive. Shigeru Sugiyama, et al. in Journal of Colloid and Interface Science 292 (2005) 133-138, suggest to recycle the MAP, obtained from the removal of ammonium, by decomposing it thermally in order to eliminate the ammonium as gaseous NH₃ and to recycle the magnesium and phosphorus salts in a new MAP production cycle; therefore, the gaseous ammonia is physically removed from the plant. This procedure, despite being interesting, results energy-demanding. Moreover, M. Iqbal H. Bhuiyan et al. in Chemosphere 70 (2008) 1347-1356 show how it is difficult to turn the thermal decomposition process towards the formation of Magnesium Hydrogen Phosphate (MHP), the salt needed to start a new cycle of MAP production.

Shujun Zhang, et al. in Desalination 170 (2004) 27-32, and Shilong He, et al. in Chemosphere 66 (2007) 2233-2238, suggest to chemically decompose the MAP by acidification or alkalinization of recovered MAP, in order to decompose and recover the magnesium and phosphorus salts required for a new MAP production. Such methods solve the problems related to the thermal decomposition but are expensive due to the high amounts of acids or alkali that the process requires. Furthermore, the addition of acids or alkali may result in an excessive concentration of Na⁺, Cl⁻, SO₄²⁻ , due to their accumulation during the recycling processes. Among the listed methods for the removal of ammonium, the precipitation of MAP results particularly appealing for being an easy to handle process and liable to be applied over a wide range of plant scale.

US2009127094 proposes a procedure for the electrochemical decomposition of the ammonium present in an alkalinized solution and claims the applicability of such a procedure also for the decontamination of ammonia contained in wastewaters. Anyway, this procedure is poorly efficient and requires the solution to be alkalinized up to high pH values thus making this process not applicable at the typical ammonium concentrations found in zootechnical or industrial wastewaters where the ammonium concentration would be too low and the process volumes too high.

The need of introducing a novel process for the removal of ammonium in wastewaters arises that allows an efficient recycling of MAP obtained from the aforesaid wastewaters, for the recovery of magnesium and phosphorus salts, liable to be used in a subsequent MAP precipitation cycle and thus achieving the removal of ammonium from the treated wastewaters.

The aim of the present invention is to solve the above mentioned problems and provide an easy and cost-effective MAP recycling process in a wastewater treatment plant

This aim is reached by means of the present invention that provides a process according to claim 1.

The above-mentioned process includes the following steps: (a) capture of the wastewater ammonium and/or ammonia by means of the precipitation of Magnesium Ammonium Phosphate (MAP) by adding to the wastewater itself magnesium and phosphorus salts; (b) separation of the precipitate from the treated wastewaters; (c) decomposition of the precipitate in order to recover the ammonia-related energy and the magnesium and phosphorous salts used in (a); (d) recycling of the magnesium and phosphorous salts for a new MAP precipitation cycle as reported in (a); The process is characterized by the fact that the ammonia released in the decomposition is, at least partially, removed from the reaction environment by cleavage of ammonia itself into hydrogen and nitrogen.

Preferentially, such decomposition occurs by thermolytic or electrolytic way.

According to an embodiment of the invention, the ammonia is partially cleaved and a percentage of at least 20% of nitrogen is reached in the produced atmosphere. The resulting atmosphere is then sent to a CHP generator, e.g. one that utilizes the biogas resulting from the anaerobic digestion process.

According to another embodiment of the invention, the hydrogen produced is transferred to an electric generator such as fuel cells, a CHP or similar.

A further object of the present invention is a wastewater treatment plant that includes devices aimed at precipitating the MAP from the aforesaid waters, devices for the decomposition of MAP into ammonia, magnesium and phosphorus salts, characterized by the fact of including further devices for the cleavage of the aforesaid ammonia into hydrogen and nitrogen.

According to an embodiment of the invention, such decomposition devices are or include an electrolytic cell.

A further object of the invention is the product of the precipitation of MAP, that can be achieved at least after three precipitation and decomposition cycles and that contains at least 10% and preferably 10-30% (w/w) organic matter resulting from wastewaters and co-precipitated or rather incorporated into the precipitated MAP. The procedure and the plant according to the present invention show many advantages compared to prior art.

The application of the precipitation of MAP followed by the electrodecomposition of the ammonium present in the MAP, results in a reciprocal benefit of the two processes making both the processes of ammonium removal from the wastewater with the production of MAP and the electrochemical conversion of ammonia, into useful products such as hydrogen, efficient, cost-effective and feasible. Once subjected to direct electrolysis of ammonium, the MAP is converted into MHP, a magnesium and phosphorus salt, useful for a new process of MAP production in an extremely efficient way.

The removal of ammonium by means of MAP precipitation is very efficient for the subsequent electrolysis process because it remarkably concentrates the ammonium content and reduces the volumes of the wastewater to be treated. This implies a reduction in the size of the electrolyzer, a reduction of the electrode surface and thus of their dimensions, thus minimizing the amount of catalyst required for the process. This leads to an economical advantage and a plant simplification.

Even of further relevance is the added value embedded in this process, consisting in the conversion of ammonium into hydrogen, which shows a high energy density and can by easily converted into electric power by means of a fuel cell (FC) or a classical CHP generator system. The electric power derivable exceeds the energy requirements of the process and thus the whole process leads to a positive energy balance with regards to the electric power production with a not negligible economical benefit. By applying the present invention to the removal of ammonium it no longer results to be a net cost but it turns out to be a parallel process of energy production. In addition, the electrodecomposition of MAP does not require, if not minimally, alkalinization, because the optimal conditions for the precipitation of MAP are already alkaline, than avoiding in this way the use of chemical conditioners such as acids or alkali that could lead to an accumulation of various electrolytes during the repeated recycling steps and that could generate further problems for the disposal of the treated effluent or the final precipitate.

Lastly, it is particularly noteworthy the fact that the electric power produced according to the present invention is completely free from CO₂ emissions, because it does not result from carbon - fuels.

Those and others benefits will be further described in details referring to the drawings included, with a demonstrative and not limitative function, in which:
- Fig 1 is a flow chart of the process steps of the process according to the preset invention;
- Fig 2 is a flow chart of the wastewaters treatment plant according to the present invention;
- Figs 3 and 4 are XRPD spectra of the MAP and the treated MAP according to the present invention.

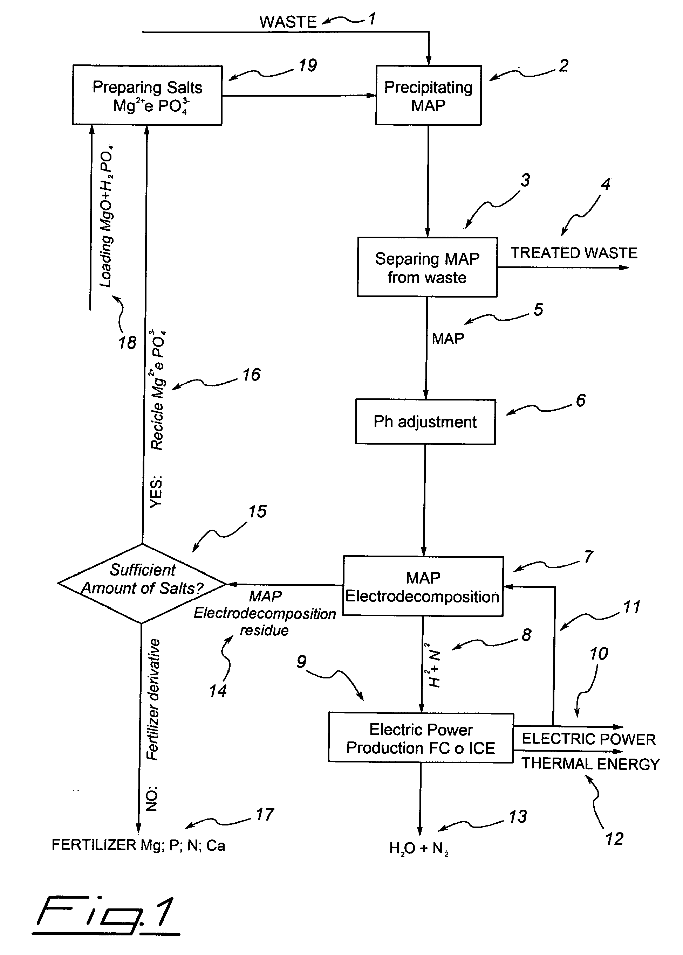

Figure 1 shows a flow chart of the process according to the present invention. The wastewater to be treated 1, with an high ammonium content, flows into the treating device 2 where magnesium and phosphorus salts are added, after being prepared in device 19. These salts are necessary for the precipitation of MAP in device 2. The wastewater thus treated, containing the MAP crystals in suspension, reaches device 3 where the separation of the precipitate from the wastewater stream is carried out.

The invention allows for the treatment of wastewaters with an ammonium nitrogen content comprised between 100 and 6000 ppm, preferably from 1000 and 5000 ppm. Different kind of wastewaters can be treated in such way, such as e.g. wastewaters deriving from anaerobic treatment of urban wastewaters, zootechnical wastewaters, wastewaters resulting from the anaerobic treatment of the biological fraction of urban solid wastes, biomasses addressed to the production of biofuels or renewable sources such as biogas; leachate resulting from urban or industrial landfill; wastewaters resulting from the regeneration of resins or ionic exchange system for the capture of ammonium; wastewaters resulting from the regeneration of ammonia capturing systems through chemical of physical sorption and wastewaters resulting from industrial processes that use ammonia or ammonium such as chemical, pharmaceutical, biotechnological, galvanic, and electronic industries.

The treated wastewaters 4 turns out to have a reduced ammonium concentration according to the requirements. The recovered MAP 5 in device 3 is transferred into the device 6 where a pH adjustment is carried out in order to optimize the subsequent electrodecomposition step that will be carried out in the device 7. The pH is preferably comprised within the range 8-14 and more preferably within 9-12.

The device 7 is preferably and electrolytic cell where a decomposition of ammonia, in equilibrium with MAP, into molecular hydrogen and nitrogen is carried out. Thanks to the low reduction potential of ammonia, 0.058 V, this is easily decomposed into hydrogen and nitrogen by means of electrochemical catalysts for electrochemical processes already known in the prior art. In particular, the catalysts described in the patent WO2008/061975 of P. Bert et al., herein entirely included as reference, are preferred.

Generally, the catalysts used in the decomposition of the ammonium or ammonia are made of transition metals with catalytic effects or composed by a mixture of transition metals showing catalytic effects or catalysis adjuvant. Preferably, such catalysts are formed by one or more of the following transition metals Co, Ni, Fe, Ru, Rh, Pt, Pd, Ir, Cu, Zn, Ti, Mo, W, Zr, Pb.

The results of the process carried out in device 7 are: hydrogen and gaseous nitrogen 8 and the residue 14, mainly Magnesium Hydrogen Phosphate (MHP) and other magnesium and phosphorus salts, as a result of the electrochemical elimination of ammonia from the crystalline structure of MAP.

In particular, in the case of the thermal decomposition of MAP, the product 8 may also contain a percentage of gaseous ammonia. In order to use it in an internal combustion engine it is sufficient the hydrogen to be at least 20% (v/v) of product 8. Hydrogen and nitrogen 8 go to device 9 that converts hydrogen into electric power 10. Device 9 may be a fuel cell (FC) or a Internal Combustion Engine (ICE) - CHP generator that allows for the conversion of hydrogen into electric power 10.

Other devices for the conversion of hydrogen into electric energy may be used, as device 9 according to the purity grade obtainable for hydrogen 8. Device 9 produces also a certain amount of thermal energy 12 in relation to the conversion efficiency of hydrogen 8 into electric power 10. Such thermal energy may result more or less useful depending on the temperature at which it is produced, temperature that, in turn, depends essentially on the hydrogen conversion technology utilized in device 9. A part of the electric energy 11 is withdrawn from the amount of electric energy 10 produced by device 9 and internally reused in the process in order to supply the electrochemical device 7. From device 9 water and nitrogen 13 are released into the atmosphere. Water results from the oxidation of hydrogen carried out by device 9 aimed at producing electric power 10 and the nitrogen released is that resulting from the whole ammonium removal process carried out according to the present invention leading to a denitrification of the ammonium load present into the wastewater.

The residues of the MAP electrodecomposition 14, i.e. those resulting from the electrodecomposition step 7 are subjected to the condition 15 and providing 16 is verified, then recycled back to the device for the preparation of magnesium and phosphorus salts 19. In device 19 a certain amount of magnesium oxide and phosphoric acid 18 are added or other magnesium and phosphorus salts, in order to reintegrate a potential loss of phosphorus and magnesium due to the precipitation in step 2 of insoluble salts other than MAP and thus not recyclable according to the present invention.

Should the case be that condition 15 does not stand, that means that the fraction of precipitate other than MAP is too high. These precipitates are due to the presence in the wastewater of others cations such as calcium that precipitates e.g. as calcium phosphate, highly insoluble. When the load of such undesired precipitates results so high that the recycling of the magnesium and phosphorus salts 16 is no longer effective, condition 15 does not stand anymore and thus the precipitate is discharged and a new process with fresh magnesium and phosphorus salts is initiated.

The discharged precipitate 17 shows a not negligible market value as fertilizer of Mg; P; N; Ca. This fertilizer contains MAP that can be regarded as a remarkable fertilizer due to its slow release of N and P as well as calcium phosphate. In addition to these essential elements, precipitate 17 also contains a remarkable amount of highly bioavailable organic materials, normally present in the wastewaters, that co-precipitate along with MAP and accumulate during the recycling steps of magnesium and phosphorus salts, according to the present invention. As mentioned before, this co-precipitate contains at least the 10% (w/w) organic matter, generally 10-30% by weight and preferably at least 20% by weight of organic matter resulting by wastewaters and this finding is an object of the present invention.

Summarizing, by means of the present invention the ammonium contained in wastewaters is converted electrolytically or thermally into hydrogen and nitrogen with subsequent energy recovery from the same. The precipitation of the ammonium present in wastewaters as MAP allows for a more efficient electrodecomposition process. The electrodecomposition of MAP allows for an efficient recycling of MHP for a new MAP production cycle. As waste products, alongwith the treated wastewater, the process related to the present invention produces a fertilizer with a high added value, water and nitrogen; the energy produced according to the present invention is not related to CO₂ emissions.

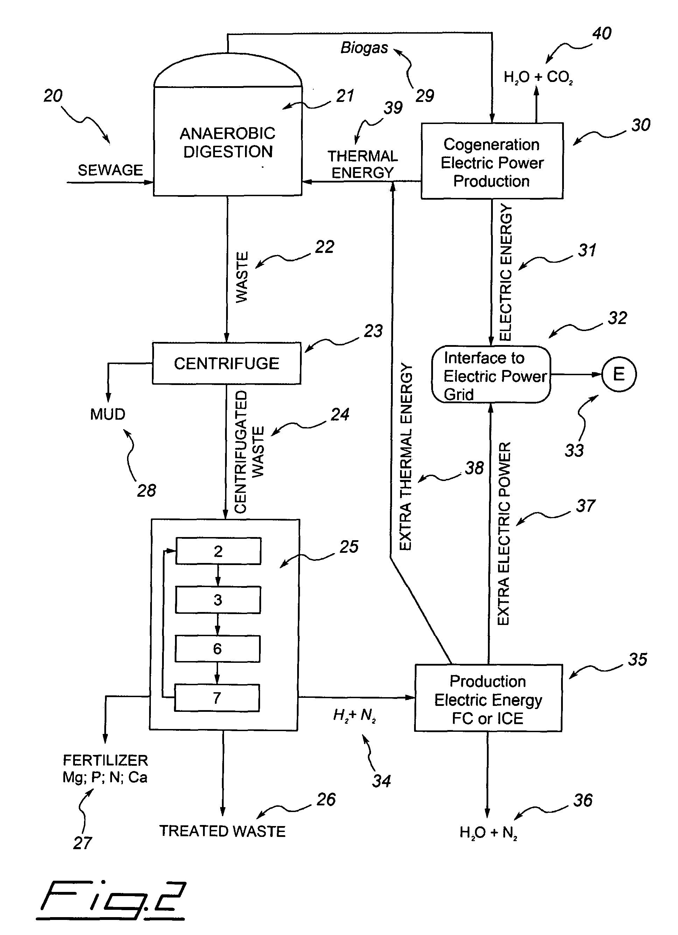

Figure 2 shows a flow chart of the application of the present invention for the treatment of wastewaters resulting from anaerobic digestion plants. The anaerobic digestion plants may treat either urban or zootechnical and similar wastewaters. The present example highlights how the amount of energy recoverable from the application of the present invention can represent a remarkable amount when related to the energy production capacity of the anaerobic digestion plant itself which applies the present invention.

The wastewaters resulting from the anaerobic digestion plant show an ammonium nitrogen content ranging between 1000 to 4000 ppm. The realization of the invention herein described is based on the embodiment of the present invention to a really operating anaerobic digestion plant for biogas production for which the parameters of biogas production, and thus energy, are known and measurable. In particular, for a biogas production plant processing swine sewages the following inlet/outlet parameters are provided:
sewage inlet flow 20, 1200 m³/d; N-NH₄ 1540 ppm; Volatile Solids 14,28 Kg/m³;
COD 29290 ppm. Centrifuged wastewater outlet flow 24 1170 m³/d; N-NH₄ 1370 ppm; Volatile Solids 6.85 Kg/m³ COD 5600 ppm.

The sewage inlet flow 20 enters the anaerobic digester 21 in which, by means of specialized anaerobic bacteria consortia biogas 29 is produced. The amount of the biogas produced by the plant analyzed in the present example is about 0.45Nm³ biogas for each kilogram volatile solids contained in the inlet sewage. This results in a daily biogas production of 7716 Nm³/d, giving a lower heating value for the biogas of 23.3 MJ/Nm³, the biogas production plant object of the present example, has a daily energy production capacity of 179.6 GJ/d. The biogas 29 is converted into electric power 31 by means of the CHP generator 30, the amount of electric power 31 depends on the efficiency of the CHP generator 30 that, in the current case, is about 35%. Therefore, such a plant produces 17.5 MWhₑ/d electric power, corresponding to a plant power size of 728 KWₑ. The electric energy 31 is distributed to the national electric grid 33 by means of device 32.

From the CHP generator 30 an amount of thermal energy 39 is also produced depending on the efficiency of the CHP generator itself. In the present case, being the biogas conversion efficiency about 35%, we have a thermal energy 39 production of about 65% of the biogas energy content 29 produced by the digester 21. Such amount of thermal energy is used within the same plant for keeping stable the inner temperature of the digester in order to maximize the biogas 29 production.

The digester outlet wastewater 22 goes to centrifuge 23 for carrying out the separation of the sludge 28 from the centrifuged wastewater 24 that has to be treated in order to lower its ammonium content, that, in the case in question, shows an average concentration of 1370 ppm. The ammonium removal process is applied to the centrifuged wastewater 25 according to the main steps 2,3,6 and 7 of the present invention. By hypothesizing to calibrate the process 25 in order to remove 90% of the ammonium nitrogen content of centrifuged wastewater 24, from process 25 a treated wastewater 26 with an ammonium nitrogen content corresponding to 137ppm is discharged. After *n* recycling loops, in steps 2,3,6 and 7, of the materials required for the removal of ammonium, from process 25 a by-product 27 is obtained, usable as a fertilizer. The number of recycling loops performable in the process 25 depends on the typology of the wastewaters.

According to the present invention, the removal process 25 by electrodecomposition of the MAP produces a certain amount of hydrogen and nitrogen 34. The amount of hydrogen obtainable from process 25 contained in 34 depends on the ammonium nitrogen load of the centrifuged wastewater 24, namely 1370 ppm. By operating a 90% removal of the ammonium nitrogen load of the centrifuged wastewater 24 according to the process 25, an amount of ammonia equivalent to 1750 Kg/d can be obtained. Such an amount of ammonia corresponds to an hydrogen amount equivalent to 308 Kg/d contained in 34. The hydrogen contained in 34 is converted into electric power and thermal energy by means of the device 35 that may be a Fuel Cell (FC) or an Internal Combustion Engine (ICE) or any other kind of device capable of converting hydrogen into electric power.

More in detail, Direct Ammonia Fuel Cell (DAFC), Proton Exchange Membrane Fuel Cell (PEMFC), Molten Carbonate Fuel Cell (MCFC) Solid Oxide Fuel Cell (SOFC), Phosphoric Acid Fuel Cell (PAFC) can be used.

Alternatively, the gaseous mixture is used in a device made of or comprising an internal combustion engine properly adapted in order to be fueled with the above mentioned mixture.

The emissions from device 35 are only water and nitrogen 36. By hypothesizing that device 35 shows a conversion efficiency comparable to that of the CHP generator 35, from 308 Kg/d hydrogen 34, obtainable by means of the application of process 25 to the centrifuged wastewaters 24, 3.15 MWhₑ/d extra electric power 37 can be obtained. That, once compared to the 17.5 MWhₑ/d produced by device 30, makes it possible to achieve about a 18% increase of electric power production for the present plant. Similarly, an extra thermal energy production 38 is obtained for the internal uses of the plant as thermal energy 39 resulting from device 30.

The extra electric power 37, derived from the application of the present invention, similarly to that 31 derived from device 30, is sent to device 32 and phased into the electric grid 33. The extra production deriving from the potential application of the present invention to the real case of the biogas production plant of the present example, increases the power production capacity of the plant by about 18% bringing the plant from 728 KWₑ to 859 KWₑ, without increasing the CO₂ emissions that remain only those in 40, because, according to the present invention, an extra energy is produced having as emissions only water and nitrogen.

As above described, a preferable embodiment of the invention expects the cleavage of ammonium/ammonia in an electrolytic cell. The following example provides the general features of an electrolytic cell to be used in the present invention. Beside the cell Tokuyama Neosepta^{®} described below, other kind of electrolytic cells are suitable providing they show an equivalent capability to electrolytically cleavage ammonia/ammonium. More in detail, a classical electrolytic cell can be used in which is not present a physical separation between the anodic and cathodic emi-cells.

### Example 1: use of the MAP (struvite) obtained according to the present invention in an electrolyzer in order to obtain hydrogen and nitrogen.

*Two electrodes obtained similarly to those described in Example 6 of* WO2008/061975 *are dipped inside an electrolytic cell, using as ionic conductor inner to the cell a Tokuyama Neosepta*^{®} *A006 alkaline ionic exchange membrane. The resulting cell has been supplied on the cathodic side with a 5mol*/*dm³ potassium hydroxide solution and on the anodic side with a 5mol*/*dm³ potassium hydroxide solution and 1mol*/*dm³ of MAP obtained according to the present invention, under room pressure and temperature (25°C; latm). The described cell allows for the flowing of 90mA current at 0.6V The inner resistance of the cell results to be 30mOhm. During the current flowing the evolution of gases is evident both in the anodic and cathodic compartments. The gases evolved have been identified as hydrogen on the cathodic compartment and nitrogen on the anodic compartment. According to the hydrogen production measurements the faradic efficiency of the cell corresponds to be 95%.*

As an alternative to the electrolytical dissociation of ammonium and/or ammonia deriving from MAP the invention provides the possibility of using a thermocatalytic device. Such a device uses preferably the above-mentioned catalyst and works at temperatures ranging between 25°C and 1000°C, more precisely between 200°C and 600°C, within a pH range comprised between 0-6 and 8-14, and under pressure conditions ranging between 0 and 700 Bar.

The following example reports the result of the analysis carried out on the precipitation product (MAP) and on the product (MHP) obtained by its decomposition for the subsequent recycling.

### Example 2: Demonstration of the recyclability of MAP (struvite) according to the present invention.

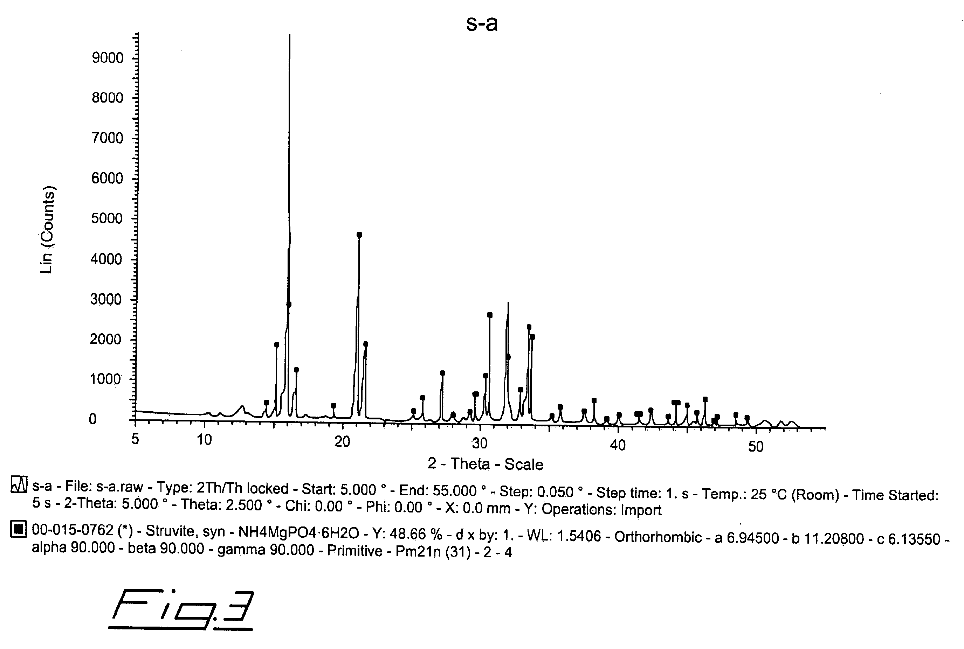

*A MAP sample obtained by zootechnical wastewaters by means of the application of the present invention has been submitted to structural analysis by means of X-Ray Powder Diffraction analysis (XRPD) that highlighted the presence of struvite as reported in* *Figure 3**. The spectrum reported in* *Fig. 3* *demonstrates the presence of struvite on the precipitate obtained according to the present invention at points 2 and 3 of* *Fig 1**. The treated wastewater resulting from the precipitation of MAP has been submitted to determination of the ammonium content according to the Kjeldahl procedure, highlighting a N-NH₄concentration lower than 150 ppm. Thereby, the present invention results to be an efficient method for the removal of ammonium from zootechnical wastewaters through the precipitation of struvite.*

*The same sample of MAP submitted to the XRPD analysis as shown in* *Fig 3**, has been electrolytically decomposed according to what described in the present invention and more in detail in Example 2. During the electrodecomposition process a certain amount of hydrogen and nitrogen is released by the electrolytic cell. At the end of the electrodecomposition process a crystalline precipitate was persisting in the aqueous surnatant. The surnatant has been submitted to the determination of the ammonium content by the Kjeldahl procedure highlighting a N-NH₄ concentration lower than 15 ppm. The precipitate in turn has been submitted to the XRPD analysis.*

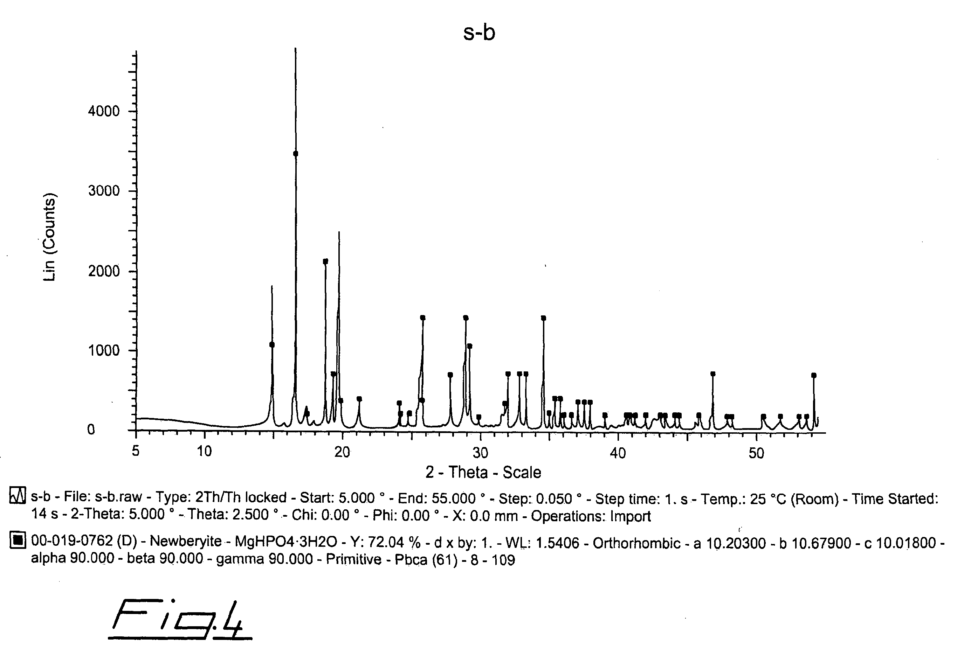

*The spectrum in* *Fig 4* *reports the results of the XRPD analysis on the crystalline residue from electrodecomposition showing up the absence of the struvite crystalline phase and the appearance of a new crystalline phase recognized as newberiyte, that is Magnesium Hydrogen Phosphate Trihydrate MgHPO₄ (MHP). The spectrum in* *Fig 4* *highlights that the electrodecomposition process is exhaustive, due to the disappearing of the signals relative to the struvite and that the electrolysis residue is the newberiyte, that is MHP, the best candidate as magnesium and phosphorus salt for a new MAP precipitation cycle on untreated wastewater. The present example demonstrates how the precipitation of MAP and its subsequent electrodecomposition, as claimed in the present invention, is an efficient process for the removal of ammonium*/*ammonia and for the recovery of its energy content.*

The invention hence protects the use of the MAP precipitating from wastewaters as hydrogen source.

As discussed above, the Magnesium Ammonium Phosphate precipitate as obtainable according to the invention method, contains at least 10% by weigh and preferably 10% and 30% by weigh of organic matter deriving from wastewaters that co-precipitate with the salts and are therein included. Object of the present invention are the precipitates obtainable after more than one recycling step of the precipitates themselves and that show the percentage of organic matter mentioned above. Preferably, such organic matters are at least 10% by weigh and, more preferably, at least 20% by weigh but may also reach higher percentages, generally up to a maximum of 30%.

## Claims

1. A process for the abatement of ammonium and/or ammonia from wastewaters, comprising the following steps: (a) capture of the ammonium and/or ammonia present in the wastewater through precipitation of Magnesium Ammonium Phosphate (MAP); (b) separation of the precipitate from the treated wastewater; (c) decomposition of the precipitate in order to recover the magnesium and phosphorous salts used in (a); (d) recycling of magnesium and phosphorous salts for a new MAP precipitation cycle as reported in (a), **characterized in that** the ammonium and/or ammonia released in the decomposition is, at least partially, transformed into hydrogen and nitrogen by cleavage.

2. A process according to claim 1 wherein the aforesaid ammonia and/or ammonium cleavage step is carried out electrolytically or thermolytically.

3. A process according to any previous claim, wherein the above-mentioned cleavage is carried out in the presence of one or more transition metals chosen among the following: Co, Ni, Fe, Ru, Rh, Pt, Pd, Ir, Cu, Zn, Ti, Mo, W, Zr, Pb.

4. A process according to any previous claim, wherein an electrolytic cleavage of MAP is carried out in a device that operates at a temperature within the range between 25°C and 374°C; and at a pressure within the range 1 to 700Bar, at a pH value comprised within the range 0 to 6 or 8 to 14.

5. A process according to any previous claim, **characterized by** treating wastewaters deriving from anaerobic digestion processes of biomasses in a biogas production process.

6. A process according to any previous claim, wherein the gaseous mixture, obtained by the aforesaid cleavage step, is a mixture of N₂ and H₂, or N₂, H₂ and NH₃, and in which the aforesaid mixture is used to produce electric power.

7. A process according to claims 5 or 6, in which the aforesaid gaseous mixture is mixed with the aforesaid biogas.

8. A plant for the implementation of a process according to one of the previous claims, including (a) means for the capture of ammonium and/or ammonia present in wastewaters by means of precipitation of Magnesium Ammonium Phosphate (MAP); (b) means for the separation of the precipitate from the treated wastewater; (c) means for the decomposition of the precipitate in order to recover the magnesium and phosphorous salts used in (a); (d) means for recycling magnesium and phosphorous salts for a new MAP precipitation cycle as reported in (a), **characterized by** further comprising means to convert at least part of the ammonium and/or ammonia released by the aforesaid decomposition into hydrogen and nitrogen by cleavage.

9. A plant according to claim 8, wherein said ammonium and/or ammonia cleavage means comprise catalysts constituted by one or more of the following transition metals: Co, Ni, Fe, Ru, Rh, Pt, Pd, Ir, Cu, Zn, Ti, Mo, W, Zr, Pb.

10. A plant according to claim 9, in which said cleavage means comprises an electrolytic cell.

11. A precipitate of magnesium ammonium phosphate according to claim 1 and containing at least 1,5%, preferably between 10% and 35% by weight, of organic matter resulting from the aforesaid wastewaters.

12. Use of Magnesium Ammonium Phosphate (MAP) precipitated from wastewaters as hydrogen source.
